# EUROPÄISCHE PATENTSCHRIFT

(11) **EP 0 806 555 B1**
(45) Veröffentlichungstag und Bekanntmachung des Hinweises auf die Patenterteilung: **31.10.2001**
(21) Anmeldenummer: 96107012.5
(22) Anmeldetag: 03.05.1996
(51) Int. Cl.: F01N 7/14, B60R 13/08

(54) **Hitzeschild, insbesondere zur Abschirmung abgasführender Teile in Kraftfahrzeugen**
Heat shield, particularly for shielding exhaust gas conduits of vehicles
Ecran de protection thermique, notamment pour la protection de conduits de gaz d'échappement des véhicules

(43) Veröffentlichungstag der Anmeldung: 12.11.1997
(73) Patentinhaber: Elring Klinger AG, 72581 Dettingen (DE)
(72) Erfinder: Kullen, Wilhelm, 72584 Hülben (DE); Wagenplast, Dieter, 70771 Leinfelden (DE); Stief, Hermann, 90766 Fürth (DE)
(74) Vertreter: Möbus, Daniela, Dr.-Ing.

(56) Entgegenhaltungen:
- DE-A- 4 035 177
- DE-A- 4 141 855
- US-A- 4 465 287
- MTZ MOTORTECHNISCHE ZEITSCHRIFT, Bd. 54, Nr. 6, Juni 1993, STUTTGART, Seiten 280-283, XP000367373 M. BLEIDT & W. KULLEN: "Abschirmsysteme- eine Lösung von Elring zur Hitzeabschirmung und Geräuschdämpfung"

## Beschreibung

Die Erfindung betrifft einen Hitzeschild, insbesondere zur Abschirmung abgasführender Teile in Kraftfahrzeugen, mit mindestens einer zwischen zwei Decklagen angeordneten metallischen Dämmlage.

Wärmequellen, wie beispielsweise Abgaskrümmer, Vorrohr, Turbolader, Abgasanlage und Katalysator eines Kraftfahrzeuges, geben ihre Wärme durch Abstrahlung, Wärmeleitung sowie Konvektion an ihre Umgebung ab. Gerade im Motorraum eines Kraftfahrzeuges sind jedoch viele Bauteile angeordnet, die hitzeempfindlich sind. Um diese zu schützen, werden zur Abschirmung der Wärmequellen Hitzeschilde unterschiedlichster Bauart eingesetzt. In der Regel bestehen diese Hitzeschilde aus einer Dämmschicht, die zwischen zwei Deck- oder Schutzlagen angeordnet ist. Die Dämmschicht kann aus einem schlecht wärmeleitfähigen Material, wie Pappe oder Faservlies, bestehen. Eine gute Wirkung haben jedoch auch gute Wärmeleiter als Dämmschichten, die die Wärme über ihre Oberfläche zur Seite ableiten. Voraussetzung hierfür ist, daß durch die Dämmschicht möglichst wenig Wärmebrücken zwischen der der Wärmequelle zugewandten Seite und der davon abgewandten Seite des Hitzeschildes entstehen. Es ist deswegen bereits die Verwendung von Metallgeweben, Metallgestricken oder Metallvliesen als Dämmschicht vorgeschlagen worden, die nur geringe Berührungsflächen zu den Decklagen ausbilden. Auch Dämmschichten aus mehreren Lagen von strukturierten Metallblechen, die untereinander punkt- oder linienförmige Kontakte aufweisen, sind im Einsatz. Die Verbindung der Decklagen und der Dämmlage erfolgt beispielsweise durch eine umlaufende oder partielle Verbördelung.

In der DE 41 41 855 C2 wird ein thermisches und akustisches Isolierlaminat beschrieben. Bei ihm sind die beiden Deckschichten durch eine im Aufbau relativ aufwendige Dämmschicht voneinander getrennt. Nachteilig bei dieser Konstruktion ist nicht nur der aufwendige Aufbau sondern auch die verhältnismäßig aufwendige Herstellung des Isolierlaminats.

Die **DE 41 41 855 A** offenbart ein Hitzeschild mit mindestens einer zwischen zwei Decklagen 1,2 angeordneten metallischen Dämmlage, einer perforierten oder gelochten Aluminiumfolie, womit die mindestens eine Dämmlage von einer mittels einer Vielzahl von Durchstoßungen strukturierter Folie gebildet ist;
dabei entstehen zwangsläufig Grate an den Durchstoßungen bzw. Lochungen. Diese Grate sind -wie aus Bild 1 der MTZ MOTORTECHNISCHE ZEITSCHRIFT, Bd. 54, Nr. 6, Juni 1993, STUTTGART, Seiten 280-283, entnehmbar- zackenförmig.

Der vorliegenden Erfindung liegt die Aufgabe zugrunde, einen Hitzeschild mit einer metallischen Dämmschicht zu schaffen, der besonders leicht ist und sehr gute Wärmedämmeigenschaften aufweist.

Die Aufgabe wird mit einem Hitzeschild nach Anspruch 1 gelöst. Die Gratteile bewirken lediglich punktförmige Wärmekontakte zu benachbarten Lagen bzw. zu den vorzugsweise ebenfalls aus Metall bestehenden Decklagen. Die Grate können dabei vorteilhafterweise nach außen umgebogen sein. Diese umgebogenen Grate bewirken eine punktuelle Verdoppelung der Materialstärke des Blechteiles oder der Folie. Zur Erzielung einer gewünschten Dämmlagenstärke reicht eventuell die Verwendung nur einer Lage bzw. weniger Lagen aus. Dieser Effekt lässt sich noch dadurch erhöhen, dass von beiden Oberflächen der mindestens einen Dämmlage ausgehend Durchstoßungen eingebracht sind, sodass an beiden Oberflächen umgebogene Durchstoßungsgrate vorhanden sind. Zweckmäßigerweise können dabei die Durchstoßungen im Wechsel von einer der beiden Oberflächen der mindestens einen Dämmlage aus eingebracht sein. Hierdurch wird eine Verdreifachung der Materialstärke erreicht. Das Gewicht des Hitzeschildes läßt sich damit gegenüber einer Verwendung andersartig strukurierter metallischer Dämmlagen deutlich reduzieren. Die Durchstoßungen sorgen außerdem für eine gute Schallabsorption, was bei der Verwendung als Abschirmung von Auspuffanlagen von Kraftfahrzeugen ein weiterer erheblicher Vorteil ist. Ein besonders hoher Wärmedämm- und Schallabsorptionseffekt kann erzielt werden, wenn mehrere Dämmlagen vorgesehen sind, wobei die Durchbrechungen benachbarter Lagen gegeneinander versetzt sind. Die einzelnen Lagen liegen nur punktuell aneinander. Zwischen den Lagen befindet sich ein wärmedämmendes Luftpolster. Die mindestens eine Dämmlage kann zweckmäßigerweise mit den beiden Decklagen verpreßt sein. Durch den Preßvorgang kann gleichzeitig das vorteilhafte Umbiegen der Durchstoßungsgrate erzielt werden. Hierdurch ergibt sich ein äußerst einfaches und preiswertes Fertigungsverfahren für den Hitzeschild. Bei einer besonders umweltfreundlichen Lösung kann die mindestens eine Dämmlage aus dem gleichen Material wie die Decklagen, beispielsweise aus Aluminium oder Stahlblech, gefertigt sein. Der Hitzeschild kann dann als Ganzes, ohne vorherige Demontage einzelner Teile, recycelt werden. Die Stabilität des Hitzeschildes läßt sich dadurch erhöhen, daß mindestens eine der Decklagen wenigstens auf ihrer Innenseite mit Profilierungen versehen sein kann. Für eine verbesserte Schallabsorption kann auch mindestens eine der Decklagen mit Perforierungen versehen sein, die eine Luftschallreduzierung nach dem Resonatorprinzip bewirken.

Nachfolgend wird ein bevorzugtes Ausführungsbeispiel eines erfindungsgemäßen Hitzeschildes anhand der Zeichnung näher beschrieben.

Es zeigen:
- Fig. 1: eine Draufsicht auf einen Hitzeschild für ein Abgasrohr eines Kraftfahrzeuges;
- Fig. 2: einen vergrößerten Teilquerschnitt durch den Hitzeschild nach Fig. 1;
- Fig. 3 a - e: mehrere Ausführungsbeispiele für eine Dämmlage eines Hitzeschildes.

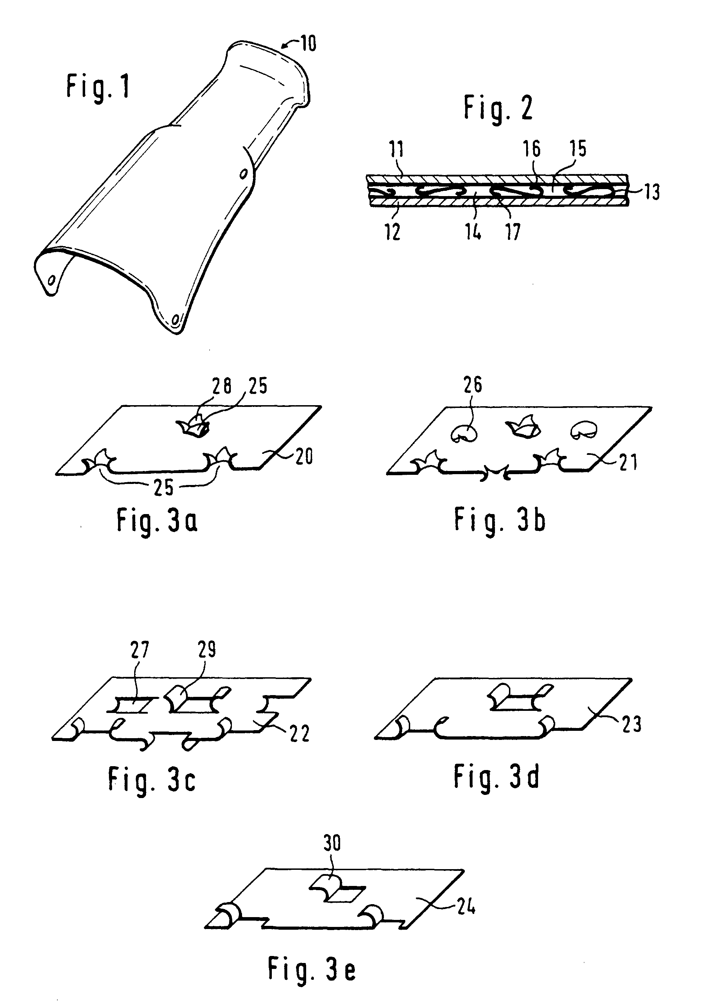

Fig. 1 zeigt einen Hitzeschild 10 zur Abschirmung einer Abgasleitung eines Kraftfahrzeuges. Der Hitzeschild 10 ist der Form des abzuschirmenden Bauteils angepaßt, so daß er nur sehr wenig Einbauraum benötigt. Wie Fig. 2 zeigt, besteht der Hitzeschild 10 aus drei Lagen, einer oberen Decklage 11, einer unteren Decklage 12 sowie einer dazwischen angeordneten Dämmlage 13, die metallisch ist. Die Decklagen 11 und 12 sind im dargestellten Beispiel unstrukturierte Blechteile. Die Dämmlage 13 wird von einem Blechteil gebildet, in das Durchstoßungen 14 und 15 eingebracht sind, wobei die Durchstoßung 14 von der der oberen Decklage 12 zugewandten Oberfläche und die Durchstoßung 15 von der der unteren Decklage 11 zugewandten Oberfläche der Dämmlage 13 aus eingebracht sind. Entsprechend befinden sich die zugehörigen Durchstoßungsgrate 16 und 17 auf gegenüberliegenden Seiten der Dämmlage 13. Die Dämmlage 13 wurde mit den Decklagen 12 und 11 verpreßt, wodurch die Durchstoßungsgrate 16 und 17, die, wie Fig. 3 zeigt, geschlitzt, zacken- oder zungenförmig sein können, nach außen umgebogen werden. Die Grate 16 und 17 bilden dabei punktförmige Wärmebrücken mit den Decklagen 11 und 12, über die nur ein sehr geringer Wärmeaustausch zwischen der heißeren inneren Decklage 12 und der äußeren Decklage 11 erfolgt. Die Durchstoßungsgrate 16 und 17 bewirken außerdem, daß die Gesamtdicke der Dämmlage 13 in etwa zwei- bis dreimal so dick ist wie die Materialstärke des Blechteiles, aus dem die Dämmlage 13 gebildet ist. Zwischen der Dämmlage 13 und den Decklagen 11, 12 ist ein Luftpolster angeordnet, daß eine geringere Wärmelcitfähigkeit als das metallische Blechteil aufweist und somit die Wärmedämmung des Hitzeschildes steigert. Selbstverständlich könnten auch mehrere Dämmlagen 13 zwischen den Decklagen 11 und 12 angeordnet werden. Zweckmäßigerweise sind die Durchstoßungen 14 und 15 benachbarter Lagen dabei gegeneinander versetzt. Hierdurch läßt sich eine noch bessere Abschirmwirkung des Hitzeschildes 10 erzielen. Der Querschnitt der Durchstoßungen 14 und 15 ist dabei beliebig. Die Verteilung der Durchstoßungen 14 und 15 über die Dämmlage 13 kann sowohl homogen als auch inhomogen sein. Auch das Anbringen von Durchstoßungen 14, 15 von nur einer Oberfläche der Dämmlage 13 aus ist möglich.

Fig. 3 zeigt verschiedene Ausgestaltungsmöglichkeiten für eine Dämmlage. In Fig. 3 a, b besteht die Dämmlage aus Blechteilen 20, 21 mit Durchstoßungen 25, 26 mit rundem Ausschnitt und zackenförmigen Graten 28, wobei diese in Fig. 3 a nur von einer Seite und in Fig. 3 b von beiden Seiten des Blechteils 20, 21 aus eingebracht sind. In analoger Weise zeigen die Fig. 3 c - c Blechteile 22 - 24 mit rechteckigen Durchstoßungen 27. Hier sind die entstehenden Grate 29, 30 zungenförmig.

## Patentansprüche

1. Hitzeschild, insbesondere zur Abschirmung abgasführender Teile in Kraftfahrzeugen, mit mindestens einer zwischen zwei Decklagen angeordneten metallischen Dämmlage, wobei die mindestens eine Dämmlage (13) von einem mittels einer Vielzahl von Durchstoßungen (14, 15, 25, 26, 27) strukturierten Blechteil oder einer Folie gebildet ist, **dadurch gekennzeinet, dass** der Grat (16, 17, 28, 29, 30) der Durchstoßungen geschlitzt, zackenförmig oder zungenförmig ist und die Grate (16, 17) punktförmige Wärmebrücken mit den Decklagen (11, 12) bilden.

2. Hitzeschild nach Anspruch 1, **dadurch gekennzeichnet, dass** die Durchstoßungsgrate (16, 17) mindestens teilweise nach außen umgebogen sind.

3. Hitzeschild nach Anspruch 1 oder 2, **dadurch gekennzeichnet, dass** auch die Decklagen (11, 12) aus Metall gefertigt sind.

4. Hitzeschild nach einem der Ansprüche 1 bis 3, **dadurch gekennzeichnet, dass** von beiden Oberflächen der mindestens einen Dämmlage (13, 20, 21, 22, 23, 24) ausgehend Durchstoßungen (14, 15, 25, 26, 27) eingebracht sind, sodass an beiden Oberflächen Durchstoßungsgrate (16, 17) vorhanden sind.

5. Hitzeschild nach Anspruch 4, **dadurch gekennzeichnet, dass** die Durchstoßungen (14, 15, 25, 26, 27) im Wechsel von einer der beiden Oberflächen der mindestens einen Dämmlage (13, 20, 21, 22, 23, 24) aus eingebracht sind.

6. Hitzeschild nach einem der Ansprüche 1 bis 5, **dadurch gekennzeichnet, dass** die Durchstoßungen (14, 15, 25, 26, 27) der mindestens einen Dämmlage (13, 20, 21, 22, 23, 24) gleichmäßig oder ungleichmäßig über diese verteilt sind.

7. Hitzeschild nach einem der Ansprüche 1 bis 6, **dadurch gekennzeichnet, dass** mehrere Dämmlagen (13, 20, 21, 22, 23, 24) vorgesehen sind, wobei die Durchstoßungen (14, 15, 25, 26, 27) benachbarter Lagen gegeneinander versetzt sind.

8. Hitzeschild nach einem der Ansprüche 1 bis 7, **dadurch gekennzeichnet, dass** die mindestens eine Dämmlage (13, 20, 21, 22, 23, 24) mit den beiden Decklagen (11, 12) verpresst ist.

9. Hitzeschild nach einem der Ansprüche 1 bis 8, **dadurch gekennzeichnet, dass** mindestens eine der Decklagen (11, 12) wenigstens auf ihrer Innenseite mit Profilierungen versehen ist.

10. Hitzeschild nach einem der Ansprüche 1 bis 8, **dadurch gekennzeichnet, dass** mindestens eine der Decklagen (11, 12) mit Perforierungen versehen ist.

11. Hitzeschild nach einem der Ansprüche 1 bis 10, **dadurch gekennzeichnet, dass** die Decklagen (11, 12) aus dem gleichen Material wie die Dämmlage (13, 20, 21, 22, 23, 24) gefertigt sind.

12. Hitzeschild nach einem der Ansprüche 1 bis 11, **dadurch gekennzeichnet, dass** die mindestens eine Dämmlage (13, 20, 21, 22, 23, 24) aus Stahl- oder Aluminiumblech gefertigt ist.

## Claims

1. Heat shield, more particularly one for shielding parts carrying exhaust gases in motor vehicles, having not less than one metallic insulating layer arranged between two outside layers, the not less than one insulating layer (13) being constituted by a sheet metal part or a foil structured by means of a large number of punched holes (14, 15, 25, 26, 27), **characterised in that** the burr (16, 17, 28, 29, 30) produced by the punched holes is slot-shaped, serrated or tongue-shaped and the burrs (16, 17) form punctual thermal bridges to the outside layers (11, 12).

2. Heat shield according to claim 1, **characterised in that** at least some of the burrs (16, 17) produced by the punched holes are bent outwards.

3. Heat shield according to claim 1 or 2, **characterised in that** the outside layers (11, 12) are also made of metal.

4. Heat shield according to any of claims 1 to 3, **characterised in that** punched holes (14, 15, 25, 26, 27) are incorporated so as to run from both surfaces of the not less than one insulating layer (13, 20, 21, 22, 23, 24), with the result that burrs (16, 17) produced by the punched holes are present on both surfaces.

5. Heat shield according to claim 4, **characterised in that** the punched holes (14, 15, 25, 26, 27) are incorporated alternately from one of the two surfaces of the not less than one insulating layer (13, 20, 21, 22, 23, 24).

6. Heat shield according to any of claims 1 to 5, **characterised in that** the punched holes (14, 15, 25, 26, 27) of the not less than one insulating layer (13, 20, 21, 22, 23, 24) are distributed uniformly or non-uniformly over the latter.

7. Heat shield according to any of claims 1 to 6, **characterised in that** a plurality of insulating layers (13, 20, 21, 22, 23, 24) are provided, with the punched holes (14, 15, 25, 26, 27) of adjoining layers being offset relative to one another.

8. Heat shield according to any of claims 1 to 7, **characterised in that** the not less than one insulating layer (13, 20, 21, 22, 23, 24) is pressed onto the two outside layers (11, 12).

9. Heat shield according to any of claims 1 to 8, **characterised in that** at least one of the outside layers (11, 12) is provided with profiling on at least the inner face thereof.

10. Heat shield according to any of claims 1 to 8, **characterised in that** at least one of the outside layers (11, 12) is provided with perforations.

11. Heat shield according to any of claims 1 to 10, **characterised in that** the outside layers (11, 12) are made from the same material as the insulating layer (13, 20, 21, 22, 23, 24).

12. Heat shield according to any of claims 1 to 11, **characterised in that** the not less than one outside layer (13, 20, 21, 22, 23, 24) is made from sheet steel or sheet aluminium.

## Revendications

1. Écran thermique, en particulier pour la protection de pièces acheminant des gaz d'échappement dans des véhicules automobiles, avec au moins une couche isolante métallique disposée entre deux couches extérieures, ladite au moins une couche isolante (13) étant formée par une pièce en tôle structurée au moyen d'une multitude de perforations (14, 15, 25, 26, 27) ou par une feuille, **caractérisé en ce que** la barbe (16, 17, 28, 29, 30) des perforations est fendue, en forme de dents ou en forme de languettes, et les barbes (16, 17) forment des ponts thermiques ponctuels avec les couches extérieures (11, 12).

2. Écran thermique selon la revendication 1, **caractérisé en ce que** les barbes des perforations (16, 17) sont au moins partiellement repliées vers l'extérieur.

3. Écran thermique selon la revendication 1 ou 2, **caractérisé en ce que** les couches extérieures (11, 12) sont elles aussi fabriquées en métal.

4. Écran thermique selon l'une des revendications 1 à 3, **caractérisé en ce que** des perforations (14, 15, 25, 26, 27) sont réalisées à partir des deux surfaces de ladite au moins une couche isolante (13, 20, 21, 22, 23, 24), de sorte que des barbes de perforation (16, 17) sont présentes sur les deux surfaces.

5. Écran thermique selon la revendication 4, **caractérisé en ce que** les perforations (14, 15, 25, 26, 27) sont réalisées alternativement à partir de l'une des deux surfaces de ladite au moins une couche isolante (13, 20, 21, 22, 23, 24).

6. Écran thermique selon l'une des revendications 1 à 5, **caractérisé en ce que** les perforations (14, 15, 25, 26, 27) de ladite au moins une couche isolante (13, 20, 21, 22, 23, 24) sont réparties de manière régulière ou irrégulière sur celle-ci.

7. Écran thermique selon l'une des revendications 1 à 6, **caractérisé en ce que** plusieurs couches isolantes (13, 20, 21, 22, 23, 24) sont prévues, les perforations (14, 15, 25, 26, 27) de couches voisines étant décalées les unes par rapport aux autres.

8. Écran thermique selon l'une des revendications 1 à 7, **caractérisé en ce que** ladite au moins une couche isolante (13, 20, 21, 22, 23, 24) est comprimée par les deux couches extérieures (11, 12).

9. Écran thermique selon l'une des revendications 1 à 8, **caractérisé en ce qu'**au moins une des couches extérieures (11, 12) est pourvue de profilages au moins sur son côté intérieur.

10. Écran thermique selon l'une des revendications 1 à 8, **caractérisé en ce qu'**au moins une des couches extérieures (11, 12) est pourvue de perforations.

11. Écran thermique selon l'une des revendications 1 à 10, **caractérisé en ce que** les couches extérieures (11, 12) sont fabriquées dans le même matériau que la couche isolante (13, 20, 21, 22, 23, 24).

12. Écran thermique selon l'une des revendications 1 à 11, **caractérisé en ce que** ladite au moins une couche isolante (13, 20, 21, 22, 23, 24) est fabriquée en tôle d'acier ou d'aluminium.
